# EUROPEAN PATENT APPLICATION

(11) **EP 2 835 716 A1**
(43) Date of publication of application: **11.02.2015**
(21) Application number: 14176887.9
(22) Date of filing: 14.07.2014
(51) Int. Cl.: G06F 1/30, G06F 11/14, G06F 9/455

(54) **Information processing device and virtual machine control method**

(30) Priority: 09.08.2013 JP 2013166784
(71) Applicant: FUJITSU LIMITED, Kawasaki-shi, Kanagawa 211-8588 (JP)
(72) Inventor: Uchida, Yasuhiko, Kawasaki-shi Kanagawa 211-8588 (JP)
(74) Representative: Hoffmann Eitle

(57) **Abstract**

An information processing device, connected to a power unit, includes a storage control unit, a stop control unit and an activation control unit. The storage control unit obtains information indicating a running state of a virtual machine mounted in the information processing device upon receipt of a notification that a power failure has occurred, and stores the obtained information in memory. The stop control unit stops a currently running virtual machine upon receipt of the notification that the power failure has occurred, and thereafter stops a power supply to hardware within the information processing device. The activation control unit activates the virtual machine on the basis of information stored in the memory when the power supply to the information processing device is started.

## Description

### FIELD

The embodiments discussed herein are related to a control of a virtual machine.

### BACKGROUND

A server is sometimes unable to properly hold data in the local server when a power source is disconnected without executing a specified process. Accordingly, even when a power abnormality such as an unexpected power failure or the like occurs, power needs to be continuously supplied to a server until a power source turn-off process using specified procedures is completed. As one method for implementing this, a method for supplying power to a server via an uninterruptible power supply (UPS) is presented. The UPS switches a source of power output to a server and the like to an internal battery at the moment it detects a power abnormality such as a power failure or the like. As a result, the UPS can continue to supply power to the server and the like as long as the internal battery power lasts even after a power abnormality such as the power failure or the like occurs. However, since the length of time during which power can be continuously supplied from the internal battery is limited, turning off the power source of the server quickly when a power failure occurs is needed.

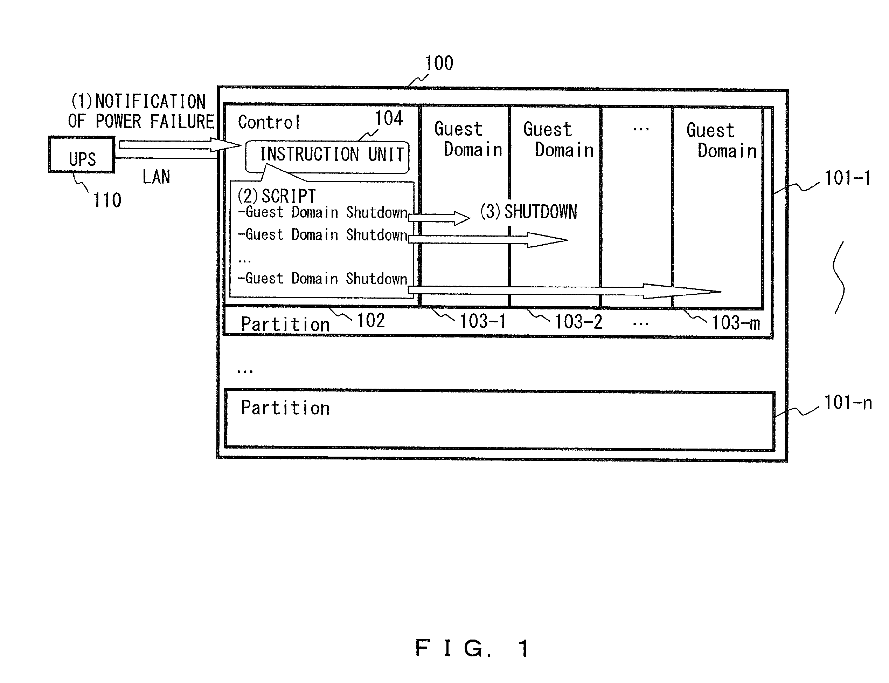

FIG. 1 is an explanatory diagram of an example of a process for turning off a power source of a server. In FIG. 1, the server 100 and a UPS 110 are connected with a LAN (Local Area Network) cable. The server 100 includes partitions 101-1 to 101-n. Each of the partitions includes one or more system boards, on which a plurality of domains are running. Each of the partitions includes one control domains 102, and a plurality of guest domains 103-1 to 103-m. The control domain 102 generates and manages the guest domains 103. In each of the domains, an OS (Operating System) is running, so that a virtual system is provided. Each of the control domains 102 includes an instruction unit 104.

When a power failure has occurred, the UPS 110 notifies the instruction unit 104 via a LAN cable that the power failure has occurred. The instruction unit 104 holds a script created by a user in advance. The instruction unit 104 issues a shutdown instruction to all domains by using the script. Each of the domains that has received the shutdown instruction stops its operation.

As a related technique, mounting of a server power source automatic control module that automatically stops logical partitions, a server, and a hardware management console in this order is known (for example, see Patent Document 1).

Patent document 1: Japanese Laid-open Patent Publication No. 2008-3735

### SUMMARY

An object in one aspect of the present invention is to restore an information processing device to a state before a power failure by automatically turning on power sources of domains when the power sources are restored after all the domains are shut down due to a power failure.

An information processing device, connected to a power unit, includes a storage control unit, a stop control unit and an activation control unit. The storage control unit obtains information indicating a running state of a virtual machine mounted in the information processing device upon receipt of a notification that a power failure has occurred, and stores the obtained information in a memory. The stop control unit stops a currently running virtual machine upon receipt of the notification that the power failure has occurred, and thereafter stops a power supply to hardware within the information processing device. The activation control unit activates the virtual machine on the basis of information stored in the memory when the power supply to the information processing device is started.

### BRIEF DESCRIPTION OF DRAWINGS

FIG. 1 is an explanatory diagram of an example of a process for turning off a power source of a server;
FIG. 2A is an explanatory diagram of an example of a process for collectively stopping virtual systems;
FIG. 2B is an explanatory diagram of an example of a process for restoring a virtual system to a state before a power failure occurs;
FIG. 3 illustrates an example of a hardware configuration of a server;
FIG. 4 illustrates an example of a configuration of a server according to an embodiment;
FIG. 5 is an explanatory diagram of an example of a process for storing information about an error;
FIG. 6A is an explanatory diagram of an implementation example of the information about an error;
FIG. 6B is an explanatory diagram of the implementation example of the information about an error;
FIG. 7 is an explanatory diagram of an example of a process for turning off a power source of a server;
FIG. 8 is an explanatory diagram of an example of information about a running state of a domain;
FIG. 9 is an explanatory diagram of an example of a process for turning on a power source of a server;
FIG. 10 is a flowchart for explaining an example of a process for collectively stopping virtual systems;
FIG. 11 is a flowchart for explaining an example of a process for restoring a virtual system to a state before a power failure occurs;
FIG. 12 is a flowchart for explaining an example of a process for storing information about an error;
FIG. 13 is a flowchart for explaining an example of a process for turning off a power source of a server; and
FIG. 14 is a flowchart for explaining an example of a process for turning on the power source of the server.

### DESCRIPTION OF EMBODIMENTS

The above described prior art technologies have the following problem. When a server is activated after a power source is restored, a user manually executes a process for turning on a power source of each domain.

Embodiments are described in detail below with reference to the drawings.

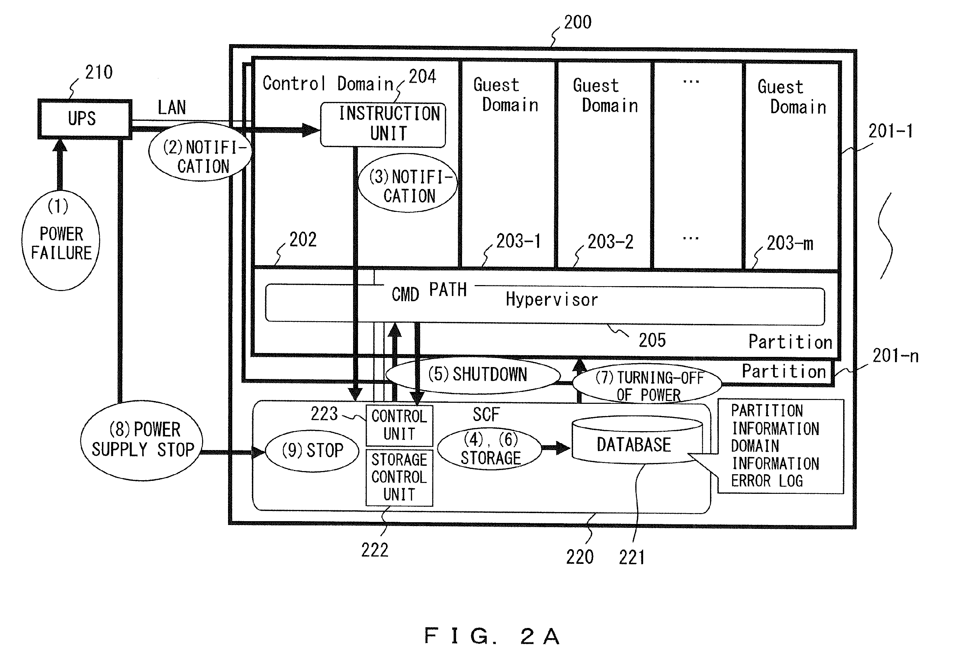

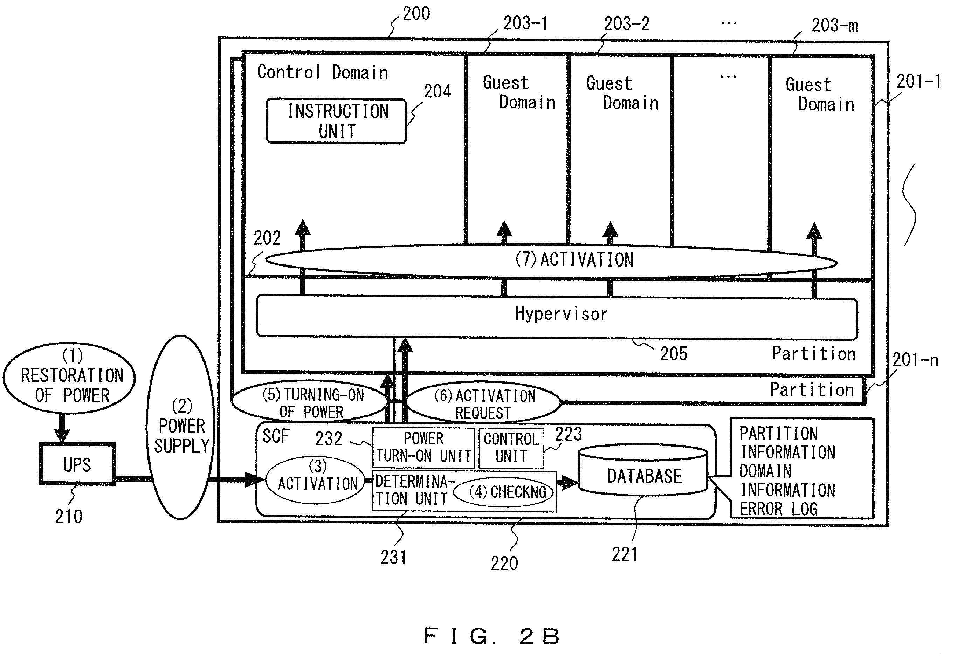

Examples of a process executed when a power failure occurs in a server, and a process for restoring a power supply in an embodiment are described with reference to FIGs. 2A and 2B. FIG. 2A is an explanatory diagram of an example of a process for collectively stopping virtual systems. In FIG. 2A, a server 200 and a UPS 210 are connected with a LAN cable. The UPS 210 is a uninterruptible power supply device. The server 200 includes partitions 201 (201-1 to 201-n), and an SCF 220. Each of the partitions includes one or more system boards, on which a plurality of domains are caused to run. The SCF 220 is a service processor. The SCF 220 turns on and off a power source, and monitors a hardware breakdown. The SCF 220 includes a database 221, a storage control unit 222 and a control unit 223. The database 221 stores partition information, domain information, and information about an error. The storage control unit 222 executes a process for storing various items of information in the database 221. The control unit 223 controls a process for turning on a power source of a partition, and a process for turning off a power source of a partition. Each of the partitions includes one control domain 202, a plurality of guest domains 203 (203-1 to 203-m), and a Hypervisor 205. The control domain 202 includes an instruction unit 204. The Hypervisor 205 is firmware that controls and manages domains of a local partition.

Procedures of a process for collectively stopping virtual systems when a power failure has occurred are sequentially described below.
(1) When a power failure has occurred, a power supply to the UPS 210 is stopped (power failure).
(2) The UPS 210 notifies the instruction unit 204 of the server 200 that the power failure has occurred (notification) .
(3) The instruction unit 204 notifies the SCF 220 that the power failure has occurred (notification).
(4) The storage control unit 222 stores, in the database 221, error information indicating that the power failure has occurred (storage).
(5) The control unit 223 issues a request to obtain information about running states of all domains to the Hypervisor 205 of each of the partitions, and also issues a shutdown request to all the domains (shutdown).
(6) The storage control unit 222 stores, in the database 221, the obtained information about the running states of all the domains (storage).
(7) The control unit 223 turns off power sources of all the partitions (a turning off of power sources).
(8) The UPS 210 stops a power supply to the SCF 220 after a specified length of time elapses (power supply stoppage).
(9) By stopping the power supply, the SCF 220 is stopped (stoppage).

With the procedures of the process indicated by (1) to (9) illustrated in FIG. 2A, the power source turn-off process based on specified procedures is executed even when a power failure occurs. With the power source turn-off process based on the specified procedures, data in a server can be prevented from being corrupted and broken down. Note that the specified length of time in (8) may be a length of time sufficient to complete the process from (1) to (7).

FIG. 2B is an explanatory diagram of an example of a process for restoring a virtual system to a state before a power failure occurs. In FIG. 2B, the same components as those of FIG. 2A are denoted with the same reference numerals. FIG. 2B is the explanatory diagram of the process executed after a power failure is restored. The SCF 220 illustrated in FIG. 2B includes the control unit 223, a determination unit 231 and a power turn-on unit 232.

An example of the process for restoring a virtual system to a state before a power failure occurs is described below.
(1) Power is restored (power restoration).
(2) The UPS 210 restarts a power supply to the server 200 (power supply).
(3) After the power supply is restarted, the SCF 220 starts an activation process (activation).
(4) The determination unit 231 determines whether or not information about an error stored in the database 221 includes information about a disconnection of the power source of the server 200 due to the power failure. When the power source of an information processing device is disconnected due to the power failure, the control unit 223 obtains, from the database 221, information indicating for which partition domain a shutdown process has been executed at the time of the power failure (checking).
(5) The power turn-on unit 232 turns on the power source of the partition for which the shutdown process has been executed due to the power failure (turning on of the power source).
(6) The control unit 223 requests the Hypervisor 205 of each of the partitions activate the domain for which the shutdown process has been executed due to the power failure (activation request).
(7) The Hypervisor 205 restores the virtual system to the state before the power failure by booting up an OS of the domain for which the shutdown process is executed due to the power failure (boot-up).

By executing the process indicated by (1) to (7) of FIG. 2B, the server 200 is restored to the same state as that of partitions and domains before a power failure even if the power failure occurs. The database 221 for storing information about a partition/domain error at the time of a power failure may be a storage unit. In both FIGs. 2A and 2B, the SCF 220 and each of the partitions are connected with a communication path called a CMD (COMAND) path, and bi-directionally communicate with each other.

An information processing device can be restored to a state before a power failure by automatically turning on power sources of domains when the power sources are restored after all the domains are shut down due to the power failure.

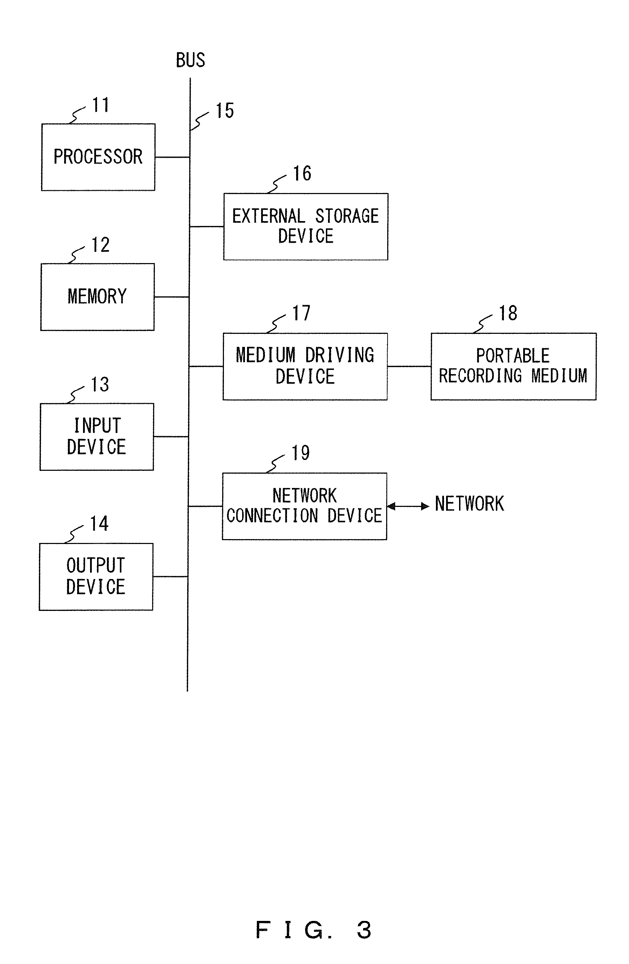

FIG. 3 illustrates an example of a hardware configuration of a server. The server 200 includes a processor 11, a memory 12, a bus 15, an external storage device 16 and a network connection device 19. The server 200 may also include an input device 13, an output device 14 and a medium driving device 17 as options. The server 200 is implemented, for example, with a computer or the like.

The processor 11 may be an arbitrary processing circuit including a central processing unit (CPU) . The processor 11 can operate as the instruction unit 204, the storage control unit 222, the control unit 223, the Hypervisor 205, the determination unit 231 and the power turn-on unit 232. Note that the processor 11 can execute a program stored, for example, in the external storage device 16. The memory 12 operates as the database 221, and holds partition information, domain information, and information about an error. The memory 12 also stores data obtained by an operation of the processor 11, and data used for a process of the processor 11 when needed. The network connection device 19 is used to communicate with another device.

The input device 13 is implemented, for example, as a button, a keyboard, a mouse or the like, whereas the output device 14 is implemented as a display or the like. The bus 15 interconnects the processor 11, the memory 12, the input device 13, the output device 14, the external storage device 16, the medium driving device 17 and the network connection device 19 so that data can be mutually transmitted and received. The external storage device 16 stores a program, data and the like, and provides stored information to the processor 11 and the like when needed. The medium driving device 17 can output data of the memory 12 and the external storage device 16 to a portable recoding medium 18, and can read a program, data and the like from the portable recoding medium 18. Here, the portable recoding medium 18 can be implemented as an arbitrary portable recoding medium including a floppy disk, a magneto-optical (MO) disk, a compact disk recordable (CD-R) and digital versatile disk recordable (DVD-R).

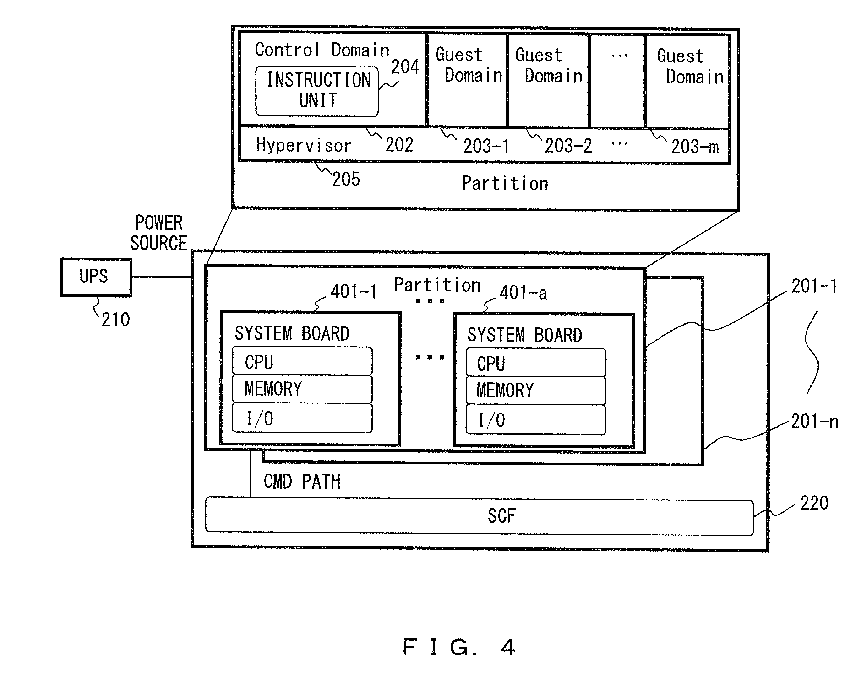

FIG. 4 illustrates a configuration example of a server according to an embodiment. In FIG. 4, the same components as those of FIG. 2 are denoted with the same reference numerals. The server 200 includes a plurality of system boards. Each of partitions 201 (201-1 to 201-n) of the server 200 includes one or more system boards 401 (401-1 to 401-a), each of which has a CPU, a memory, and I/O ports. Each of the system boards 401 causes a plurality of domains 202 and 203 (203-1 to 203-m), the Hypervisor 205 and the instruction unit 204 to operate. Note that the SCF 220 operates by using a CPU, a memory and the like other than those on system boards included in the partitions.

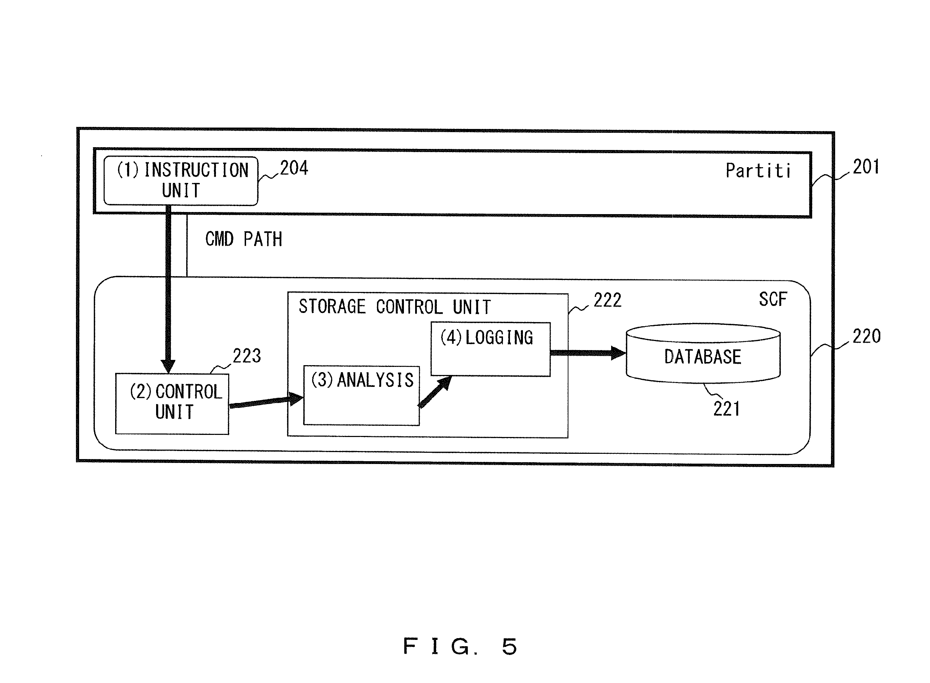

FIG. 5 is an explanatory diagram of an example of a process for storing information about an error. FIG. 5 is the explanatory diagram of the process indicated by (3) and (4) of FIG. 2A. In FIG. 5, the same components as those of FIG. 2 are denoted with the same reference numerals. Each of the partitions 201 includes the instruction unit 204. Each of the partitions 201 and the SCF 220 are connected by a CMD path, and bi-directionally communicate with each other. The SCF 220 includes the control unit 223, the storage control unit 222 and the database 221. In the process for storing information about an error, the instruction unit 204 initially issues a request to store error information indicating that a power failure has occurred as interrupt information of a process executed by the control unit 223. Upon receipt of the interrupt information, the control unit 223 then issues an instruction to analyze the information to the storage control unit 222. The storage control unit 222 analyzes content, and a storage date and time of the error information, and the like. Thereafter, the storage control unit 222 stores the error information in the database 221.

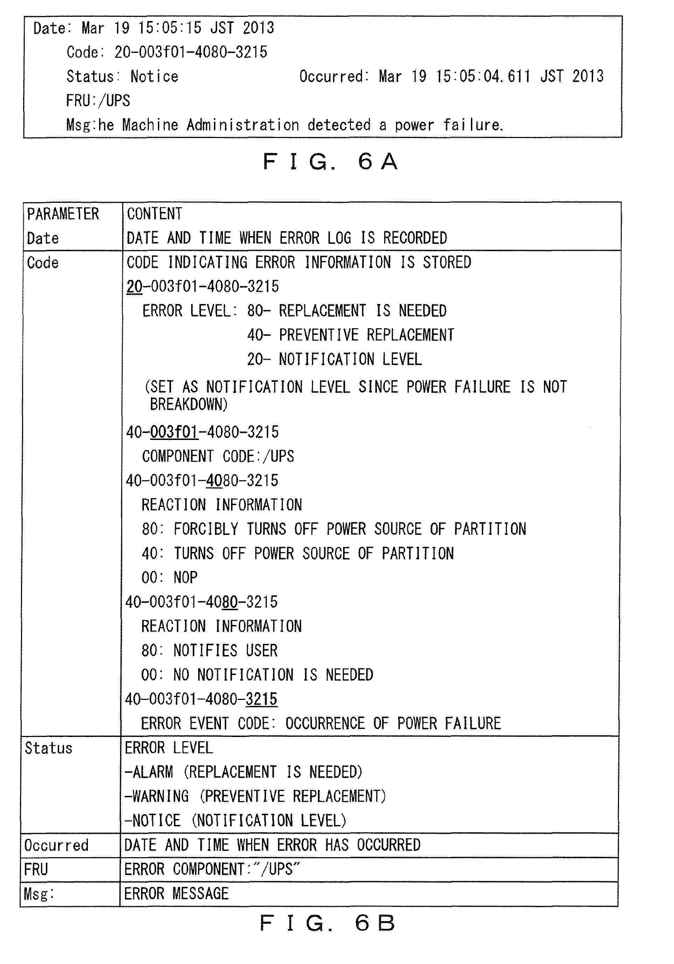

FIGs. 6A and 6B are explanatory diagrams of an implementation example of information about an error. FIG. 6A is an implementation example of information about an error, whereas FIG. 6B is an explanatory diagram of details of the implementation example. The information about an error, which is stored in the database 221, includes parameters such as Date, Code, Status, Occurred, FRU and Msg, which are illustrated in FIG. 6B. Date, which is a parameter in the implementation example of FIG. 6A, is "Mar 19 15:05:15 JST 2013". Date is the date and time when error information is stored. The implementation example indicates March 19, 2013, 15:05:15, Japan time (JS).

Code, which is a parameter in the implementation example of FIG. 6A, is "20-003f01-4080-3215". Code is a code that indicates error information. "20" present at the beginning of Code in the implementation example is a value that indicates the degree of seriousness of an error. "20" at the beginning of Code is, for example, a notification level. Since a power failure is not a breakdown, it is preferable to set the power failure as a notification level. The beginning of Code may represent information indicating a level at which replacement of a device is recommended, or a level at which replacement of a device is preventively recommended. "003f01" of Code in the implementation example is identification information of a component. For example, "003f01" represents UPS. This is because information indicating that a power failure has occurred is reported from UPS.

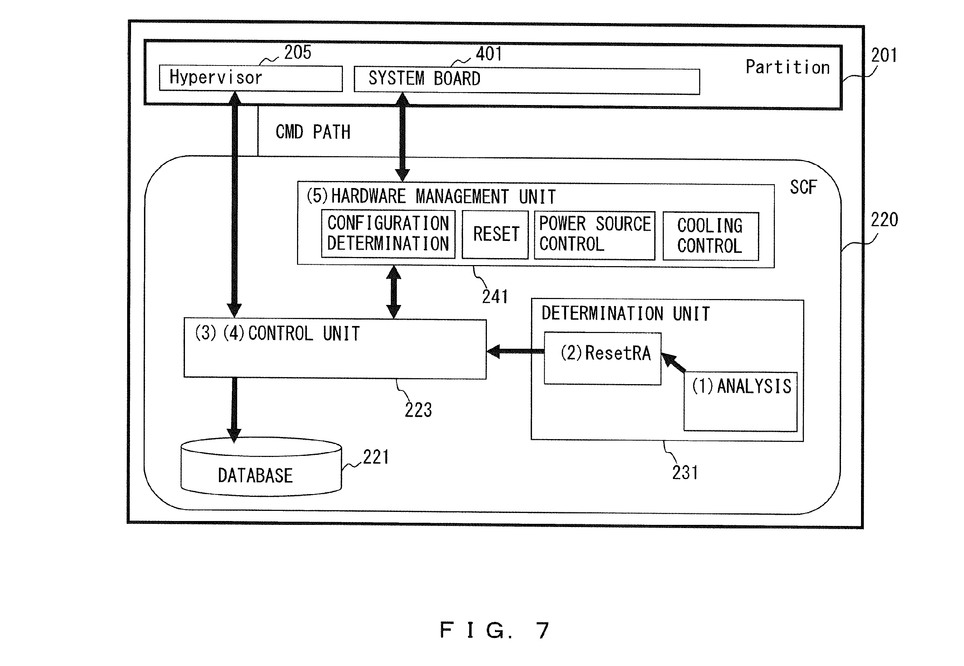

Next, "4080" of Code in the implementation example is information about a reaction demanded next for the server based on the error information. Preceding two digits "40" of "4080" represent an instruction to turn off a power source of a partition. When a power failure occurs, a power source of a partition is turned off on the basis of information of Code after error information is stored in the database 221, as will be described later in FIG. 7. Similarly, "40" may be different numbers, or may be information indicating an instruction to forcibly turn off a power source of a partition, or information indicating that no instruction is issued. Succeeding two digits "80" of "4080" represent whether or not to notify a user. "80" may be different numbers, or information indicating that no notification is made.

"3215" of Code in the implementation example is identification information indicating an event of an error. For example, "3215" indicates that a power failure has occurred. "3215" may be different numbers, or may be information about another failure or breakdown.

Parameters such as Status, FRU, Msg and the like are used to display information included in Code in the implementation example for ease of understanding of a user. Status, which is a parameter in the implementation example of FIG. 6A, is "Notice". Status represents the degree of seriousness of an error. Status is used to display "20" present at the beginning of Code in the implementation example for ease of understanding of a user. "Notice" of Status represents a notification level.

Occurred in the implementation example illustrated in FIG. 6A is "Mar 19 15:05:04.611 JST 2013". Occurred indicates the date and time when an error has occurred. In the implementation example, Occurred indicates March 19, 2013, 15:05:04.611, Japan Time (JST).

FRU in the implementation example of FIG. 6A is UPS. FRU is information indicating a component where an error has occurred. FRU is used to display "003f01" of Code in the implementation example for ease of understanding of a user. Msg in the implementation example of FIG. 6A is "The Machine Administration detected a power failure." Msg is information indicating content of an error. Msg is used to display "3215" in the implementation example of FIG. 6A for ease of understanding of a user.

An order of items of error information is not limited to that of parameters such as Date, Code, Status, Occurred, FRU, Msg and the like in this implementation example. Moreover, numbers and codes, which are used for the parameters, are not limited to the depicted contents.

FIG. 7 is an explanatory diagram of a process for turning off the power source of the server. In FIG. 7, the same components as those of FIG. 2 are denoted with the same reference numerals. The partition 201 includes the Hypervisor 205 and the system board 401. The partition 201 and the SCF 220 are connected by a CMD path, and bi-directionally communicate with each other. The SCF 220 includes the control unit 223, a hardware management unit 241, the determination unit 231 and the database 221. The hardware management unit 241 executes a process for verifying whether or not a fault has occurred on the system board 401, an operation stop process, a power source turn-off process, and a process for stopping rotations of a FAN, and monitoring of a temperature and a voltage. The process for turning off the power source of the server is executed after the information about an error is stored in the database 221 as illustrated in FIG. 5.

In the process for turning off the power supply of the server, the determination unit 231 initially analyzes information about an error, which is stored in the database 221. The determination unit 231 determines whether or not a code indicating that a power source of a partition is to be turned off is included in the information about the error. If the code indicating that the power source of the partition is to be turned off is included in the information about the error, the determination unit 231 instructs the control unit 223 to turn off the power source of the partition. The control unit 223 issues a request to obtain information about running states of all domains to the Hypervisor 205 of each partition, and also issues a shutdown request to all the domains. The control unit 223 stores the obtained information about the running states of all the domains in the database 221. Upon completion of shutdown of all the domains, the Hypervisor 205 notifies the control unit 223 that the process has been terminated. When all the domains are shut down, the hardware management unit 241 executes a process for verifying whether or not a breakdown has occurred on the system board 401, and executes a process for stopping an operation and a power source of the system board 401.

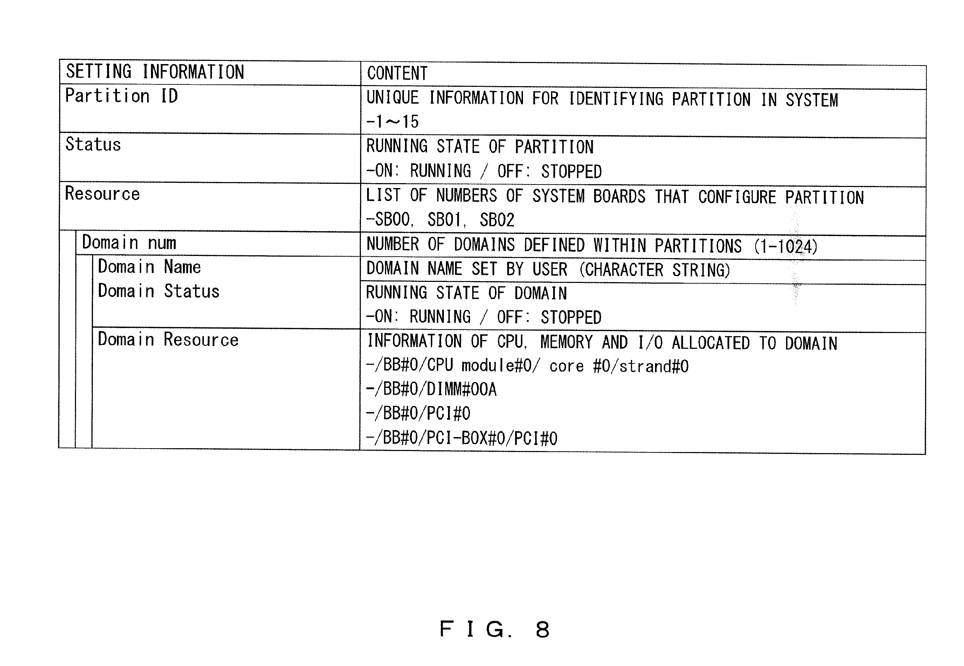

FIG. 8 is an explanatory diagram of an example of information about a running state of a domain. The information about the running state of a domain includes parameters such as Partition ID, Status and Resource. Partition ID is unique identification information within a system, which is assigned to each partition. Status indicates a running state of each partition. For example, a currently running partition is represented as "ON", whereas a currently stopped partition is represented as "OFF". Resource indicates a number of a system board mounted in a partition.

Additionally, in FIG. 8, the information also includes parameters such as Domain num, Domain Name, Domain Status and Domain Resource for each partition. Domain num is the number of domains within a partition. Domain Name is a domain name preset by a user. Domain Status is a running state of a domain. For example, a currently running domain is "ON", whereas a currently stopped domain is "OFF". Domain Resource is a CPU, a memory and I/O information, which are allocated to a domain.

Information about the running state of a domain is collected by the Hypervisor 205. Upon receipt of an instruction to obtain information about the running state of a domain from the control unit 223, the Hypervisor 205 collects information of a currently running domain within a partition.

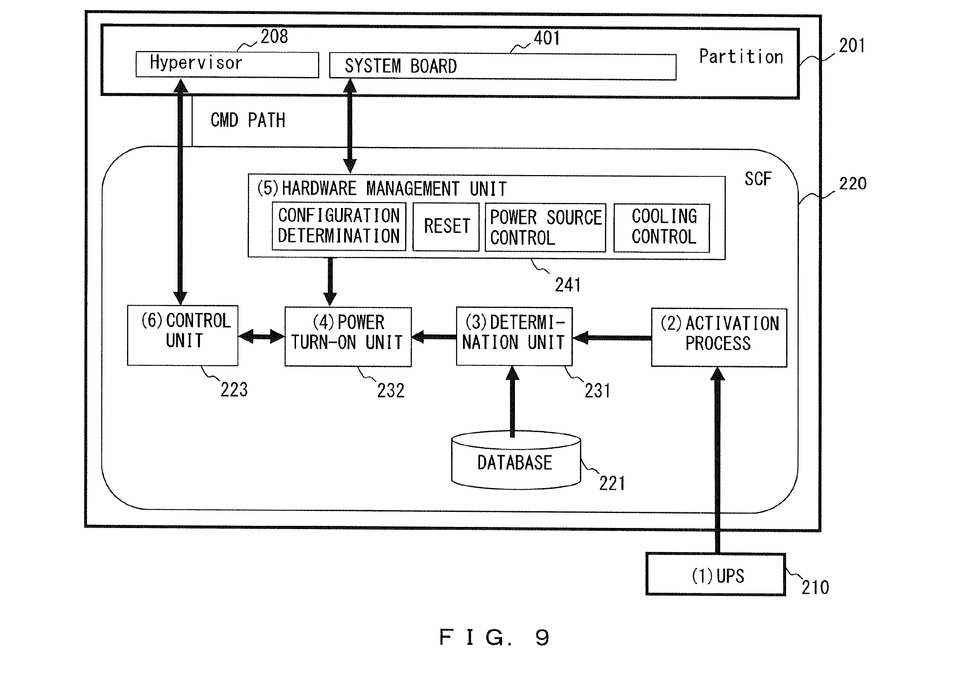

FIG. 9 is an explanatory diagram of an example of a process for turning on a power source of a server. In FIG. 9, the same components as those of FIG. 2 are denoted with the same reference numerals. The partition 201 includes the Hypervisor 205 and the system board 401. The partition 201 and the SCF 220 are connected by a CMD path, and bi-directionally communicate with each other. The SCF 220 includes the control unit 223, the hardware management unit 241, the determination unit 231, the database 221 and the power turn-on unit 232. The process for turning on the power source is executed after restoration is made from a power failure.

After restoration is made from the power failure and power is supplied to the UPS 210, the UPS 210 restarts a power supply. When the power supply is made, the SCF 220 is activated. The determination unit 231 determines whether or not information indicating an occurrence of a power failure is included in information about an error in the database 221. Moreover, the determination unit 231 checks information about a running state of a domain, and also checks a partition/domain that was running before the power failure. The power turn-on unit 232 initially issues a request to turn on the power source of the system board 401 to the hardware management unit 241 as the process for turning on the power source of the partition. The hardware management unit 241 turns on the power source of the system board 401. The control unit 223 issues a request to activate domains to the Hypervisor 205. The Hypervisor 205 activates the domains.

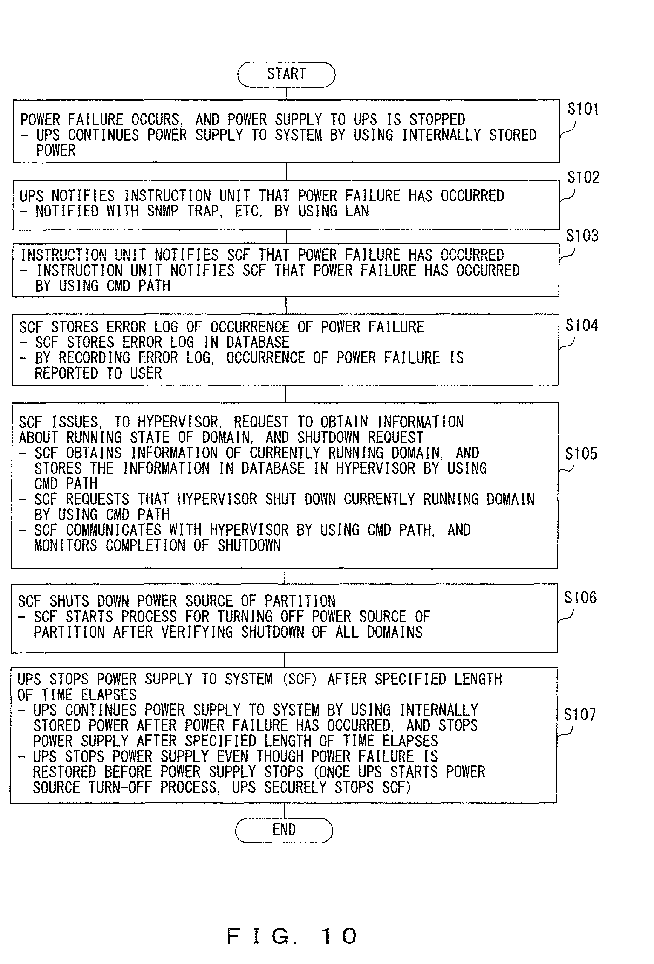

FIG. 10 is a flowchart for explaining an example of a process for collectively stopping virtual systems. When a power failure has occurred and a power supply to the UPS 210 stops, the UPS 210 makes a power supply to the system by using power stored in an internal battery (step S101). The UPS 210 notifies the instruction unit 204 that the power failure has occurred (step S102). The instruction unit 204 notifies the SCF 220 that the power failure has occurred (step S103) . The storage control unit 222 of the SCF 220 stores, in the database 221, error information indicating that the power failure has occurred (step S104).

The control unit 223 issues a request to obtain information about a running state of a domain to the Hypervisor 205, and a shutdown request to a currently running domain (step S105). The control unit 223 turns off a power source of a partition (step S106). The UPS 210 stops the power supply to the SCF 220 after a certain length of time elapses (step S107).

Information indicating that the power failure has occurred in step S102 is reported with an SNMP (Simple Network Management Protocol) trap or the like by using a LAN. The information indicating that the power failure has occurred in step S103 is reported by using a CMD path. In S105, the control unit 223 issues, to the Hypervisor 205, a request to obtain information of a currently running domain by using a CMD path. The control unit 223 stores, in the database 221, the obtained information of the currently running domain. Thereafter, the control unit 223 issues a request to shut down the currently running domain to the Hypervisor 205 by using the CMD path. The control unit 223 monitors completion of the shutdown through a communication with the Hypervisor 205 by using the CMD path. In S106, the SCF 220 executes the process for turning off the power source of the partition after it verifies that the currently running domain has been shut down.

In S104, a notification that the power failure has occurred may be made to the user after the error information is stored in the database 221. In S107, the UPS 210 stops a power supply to the SCF 220 even if the server is restored from the power failure before the power supply is stopped. The reason is as follows. Since the power shutdown process has been started, it is preferable to securely stop the SCF 220.

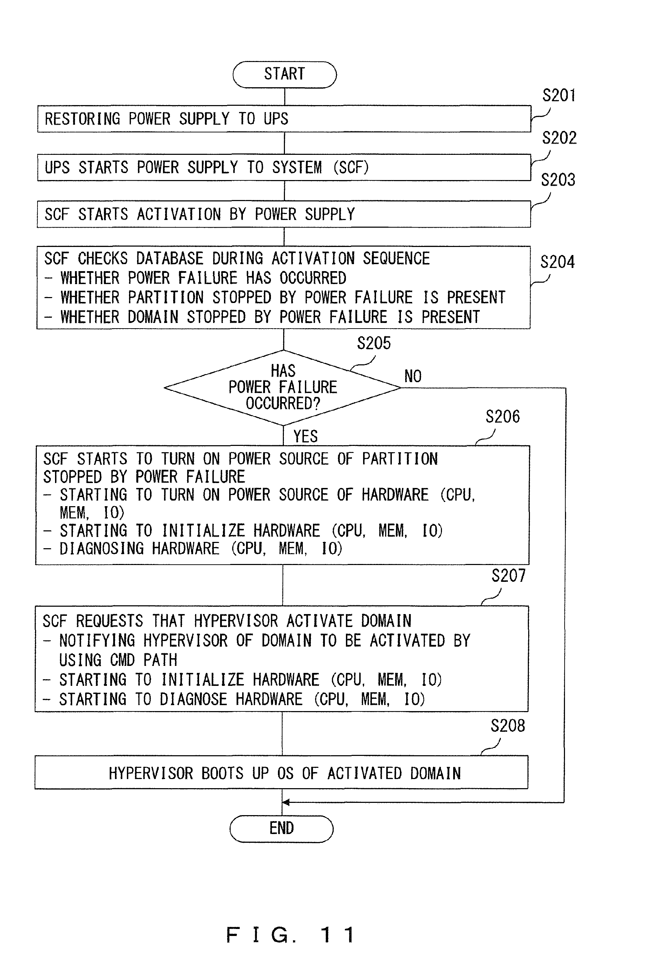

FIG. 11 is a flowchart for explaining an example of the process for restoring a virtual system to a state before a power failure occurs. Power is restored (step S201). The UPS 210 restarts a power supply to the server 200 (step S202). After the power supply is restarted, the SCF 220 starts an activation process (step S203). The determination unit 231 checks information about an error in the database 221 (step S204) . The determination unit 231 determines whether or not a power failure has occurred on the basis of the information about an error in the database 221 (step S205). The power turn-on unit 232 turns on the power source of a partition for which the shutdown process has been executed due to the power failure ("YES" in steps S206 and S205). The control unit 223 requests that the Hypervisor 205 of each partition activate the domain for which the shutdown process has been executed due to the power failure (step S207) . The Hypervisor 205 restores the virtual system to the state before the power failure by booting up an OS of the domain for which the shutdown process has been executed due to the power failure (step S208). The server 200 terminates the process for restoring the virtual system to the state before the power failure has occurred.

In S204, the determination unit 231 checks whether or not error information indicating that the power failure has occurred is present, whether or not a partition that was running before the power failure is present, and whether or not a domain that was running before the power failure is present. In step S206, once the power source of the partition starts to be turned on, the SCF 220 initializes a CPU, a memory and an I/O, which are used for an operation of the partition. In parallel, the SCF 220 diagnoses the normality of the CPU, the memory and the I/O, which are used for the operation of the partition. In step S207, a request to activate the domain is issued by using a CMD path. In addition, the SCF 220 initializes the CPU, the memory and the I/O, which are used for the operation of the partition. Moreover, the SCF 220 diagnoses the normality of the CPU, the memory and the I/O, which are used for the operation of the partition.

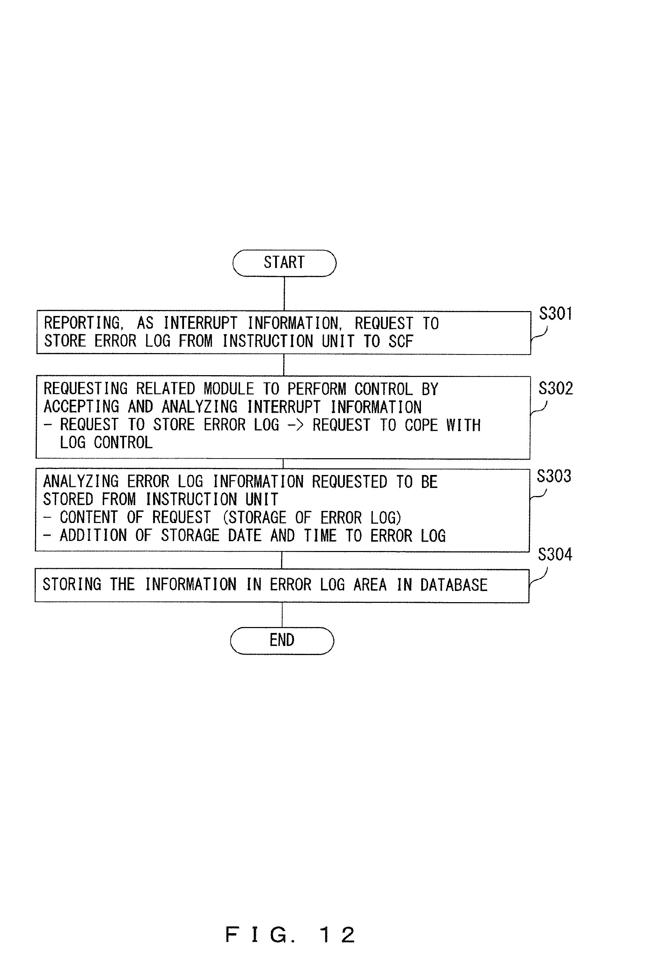

FIG. 12 is a flowchart for explaining an example of a process for storing information about an error. The control unit 223 of the SCF 220 receives, as interrupt information, a request, which is issued from the instruction unit 204, to store error information indicating that a power failure has occurred (step S301). Upon receipt of the interrupt information, the control unit 223 issues an instruction to analyze the information to the storage control unit 222 (step S302). The storage control unit 222 analyzes content, storage date and time or the like of the error information (step S303). The storage control unit 222 stores the error information in the database 221 (step S304). The server 200 terminates the process for storing the information about an error.

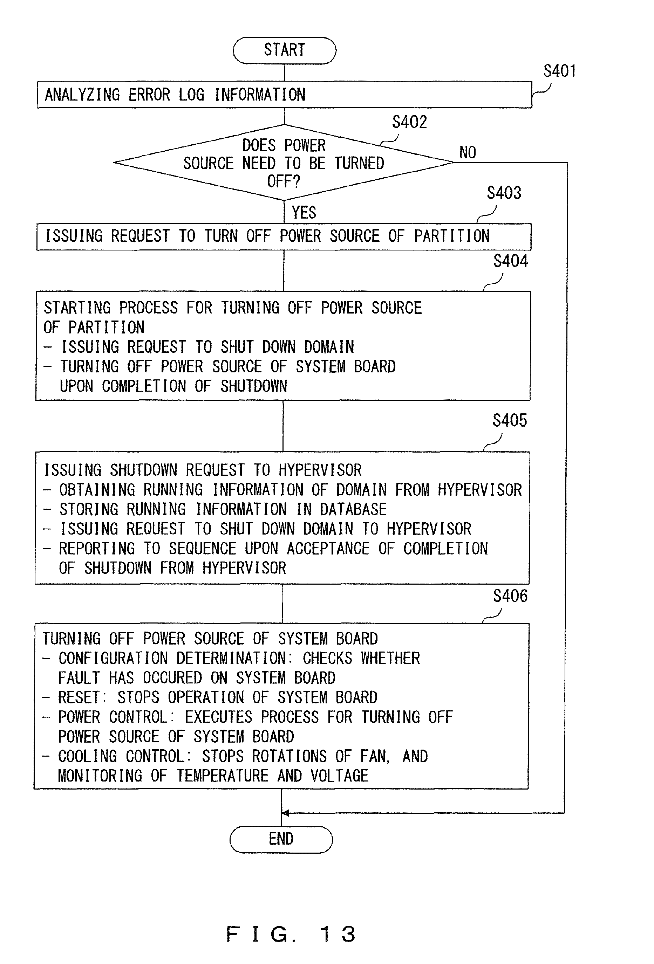

FIG. 13 is a flowchart for explaining an example of a process for turning off a power source of a server. FIG. 13 is the flowchart for explaining details of steps S105 and S106 illustrated in FIG. 10. The determination unit 231 analyzes information about an error, which is stored in the database 221 (step S401). The determination unit 231 determines whether or not a code indicating that the information about an error includes a code indicating that a power source of a partition is to be turned off (step S402). The determination unit 231 instructs the control unit 223 to turn off the power source of the partition ("YES" in steps S403 and S402). The control unit 223 starts the process for turning off the power source of the partition (step S404). The control unit 223 requests that the Hypervisor 205 of each partition obtain information about running states of all domains, and also issues a shutdown request to all the domains. The control unit 223 stores the obtained information about the running states of all the domains in the database 221. The Hypervisor 205 notifies the control unit 223 that the process has been terminated upon completion of the shutdown of all the domains (step S405). The hardware management unit 241 executes a process for verifying whether or not a breakdown has occurred on the system board 401, and executes a process for stopping an operation, a power source and the like of the system board 401 (step S406). The server 200 terminates the process for turning off the power source of the server.

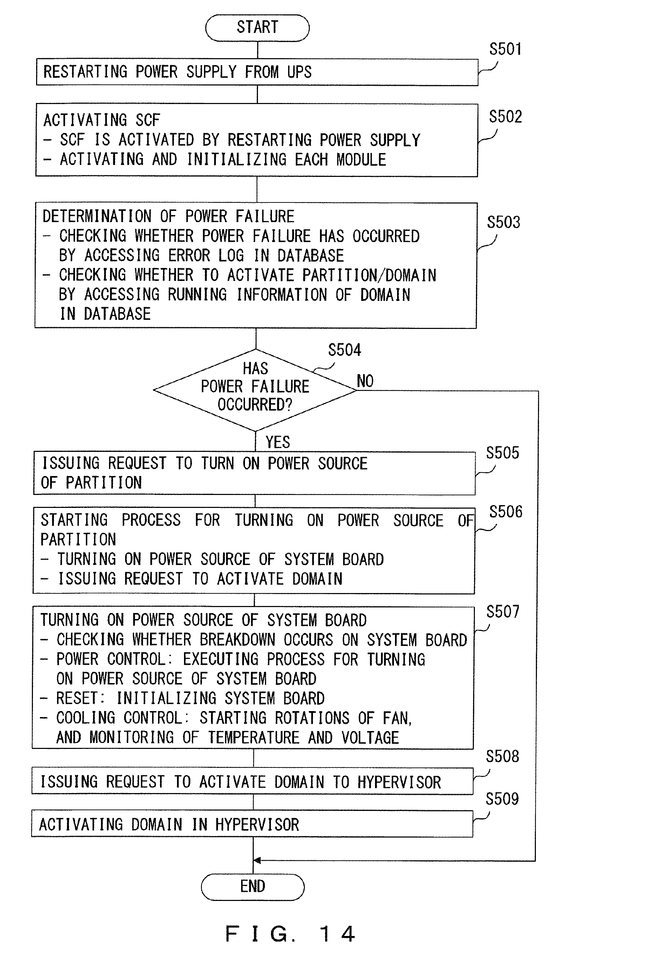

FIG. 14 is a flowchart for explaining a process for turning on the power source of the server. FIG. 14 is the flowchart for explaining further details of the process illustrated in FIG. 11. When restoration is made from a power failure and power is supplied to the UPS 210, the UPS 210 restarts a power supply (step S501). When the power supply is made, the SCF 220 is activated (step S502). The determination unit 231 checks information about an error in the database 221 (step S503) . The determination unit 231 determines whether or not a power failure has occurred on the basis of the information about an error in the database 221 (step S504) . The determination unit 231 issues a request to turn on the power source of the partition to the power turn-on unit 232 ("YES" in steps S505 and S504) . The power turn-on unit 232 initially issues a request to turn on the power source of the system board 401 to the hardware management unit 241 as the process for turning on the power source of the partition (step S506). The hardware management unit 241 turns on the power source of the system board 401 (step S507). The control unit 223 issues a request to activate the domain to the Hypervisor 205 (step S508). The Hypervisor 205 activates the domain (step S509).

In step S503, the determination unit 231 checks whether or not error information indicating that a power failure has occurred is present, whether or not a partition that was running before the power failure is present, and whether or not a domain that was running before the power failure is present.

As described above, with the method according to the embodiment, the server holds, in the database, information about a domain and a partition which were running when a power failure occurred. When restoration is made from the power failure, the server can automatically activate the domain and the partition which were running when the power failure has occurred.

## Claims

1. An information processing device(200) connected to a power unit(210), the information processing device(200) comprising:
a storage control unit(222) configured to obtain information indicating a running state of a virtual machine(202,203) mounted in the information processing device (200) upon receipt of a notification that a power failure has occurred, and to store the obtained information in a memory;
a stop control unit (223) configured to stop a currently running virtual machine(202,203) upon receipt of the notification that the power failure has occurred, and to thereafter stop a power supply to hardware within the information processing device(200); and
an activation control unit(223) configured to activate the virtual machine (202, 203) on the basis of information stored in the memory when the power supply to the information processing device(200) is started.

2. The information processing device(200) according to claim 1, wherein
the storage control unit(222) stores, in a memory, information about the running state of the virtual machine(202,203) before the power failure, information about a running state of hardware within the information processing device (200) before the power failure, and information about the power failure.

3. The information processing device(200) according to claim 2, further comprising
a power turn-on unit(232) configured to activate the hardware within the information processing device (200) on the basis of the information stored in the storage unit.

4. The information processing device (200) according to any one of claims 1 to 3, wherein
the stop control unit(223) collectively stops currently running virtual machines (202, 203) while the power unit (210) is supplying power, when a power failure has occurred.

5. A virtual machine(202,203) control method, comprising:
obtaining information indicating a running state of a virtual machine (202, 203) mounted in an information processing device (200) upon receipt of a notification that a power failure has occurred, and storing the obtained information in the memory;
stopping a currently running virtual machine(202,203) upon receipt of the notification that the power failure has occurred, and thereafter stopping a power supply to hardware within the information processing device(200); and
activating the virtual machine(202,203) on the basis of the information stored in the memory when the power supply to the information processing device(200) is started.

6. The virtual machine (202, 203) control method according to claim 5, wherein
the memory holds information about a running state of the virtual machine (202, 203) before the power failure, information about a running state of the hardware within the information processing device(200), and information about the power failure.

7. The virtual machine (202,203) control method according to claim 6, wherein
the hardware within the information processing device (200) is activated on the basis of the information held in the memory.

8. The virtual machine (202,203) control method according to any one of claims 5 to 7, wherein
currently running virtual machines(202,203) are collectively stopped while the power unit(210) is supplying power when a power failure has occurred.

9. A virtual machine(202,203) control program for causing a computer to execute a virtual machine(202,203) control process comprising:
obtaining information indicating a running state of a virtual machine (202, 203) mounted in an information processing device (200) upon receipt of a notification that a power failure has occurred, and storing the obtained information in the memory;
stopping a currently running virtual machine(202,203) upon receipt of the notification that the power failure has occurred, and thereafter stopping a power supply to hardware within the information processing device(200); and
activating the virtual machine(202,203) on the basis of the information stored in the memory when the power supply to the information processing device(200) is started.

10. The virtual machine(202,203) control program according to claim 9, the process further comprising
causing the memory to hold information about a running state of the virtual machine (202,203) before the power failure, information about a running state of the hardware within the information processing device (200), and information about the power failure.

11. The virtual machine(202,203) control program according to claim 10, the process further comprising
activating the virtual machine (202, 203) on the basis of the information stored in the memory when the power supply to the information processing device(200) is started.

12. The virtual machine(202,203) control program according to any one of claims 9 to 11, wherein
currently running virtual machines(202,203) are collectively stopped while the power unit(210) is supplying power when a power failure has occurred.
